# EUROPEAN PATENT APPLICATION

(11) **EP 4 733 633 A1**
(43) Date of publication of application: **29.04.2026**
(21) Application number: 25208106.2
(22) Date of filing: 10.10.2025
(51) Int. Cl.: F16H 59/02, B60L 15/20

(54) **VEHICLE**

(30) Priority: 22.10.2024 JP 2024185921
(71) Applicant: TOYOTA JIDOSHA KABUSHIKI KAISHA, Toyota-shi, Aichi-ken 471-8571 (JP)
(72) Inventor: IMAMURA, Tatsuya, TOYOTA-SHI, AICHI-KEN, 471-8571 (JP); ISAMI, Yoichiro, TOYOTA-SHI, AICHI-KEN, 471-8571 (JP); MOTEKI, Taro, TOYOTA-SHI, AICHI-KEN, 471-8571 (JP); OKAMURA, Yukari, TOYOTA-SHI, AICHI-KEN, 471-8571 (JP)
(74) Representative: Cabinet Beau de Loménie

(57) **Abstract**

The present disclosure relates to a vehicle (100) capable of switching a mode between a manual mode in which a driver performs gear shift operation and an automatic mode in which the driver does not need to perform the gear shift operation. The vehicle (100) comprises a manual mode shift selector used to select a gear position in the manual mode and an automatic mode shift selector used to select a range in the automatic mode. When a first condition is satisfied, the range is set to a non-travel range at the time when the mode is switched from the manual mode to the automatic mode.

## Description

### BACKGROUND

### Field

The present disclosure relates to a vehicle capable of switching a mode between a manual mode, in which the driver manually performs gear shift operation and an automatic mode, in which the driver does not need to perform gear shift operation.

### Background Art

JP2022-030862A discloses an electric vehicle that simulates manual gear shift operation of a manual transmission (MT) vehicle. The electric vehicle is configured to be capable of switching a mode between an MT driving mode, in which the electric vehicle is driven with manual gear shift operation by the driver, and an EV driving mode, in which the electric vehicle performs general EV driving without manual gear shift operation.

### SUMMARY

A vehicle which can switch a mode between a manual mode, in which the driver manually performs gear shift operation, and an automatic mode, in which the driver does not need to perform gear shift operation, is considered. Regarding such a vehicle, a shift range when the manual mode is switched to the automatic mode has not been sufficiently considered until now.

The first aspect of the present disclosure relates to a vehicle capable of switching a mode between a manual mode in which a driver performs gear shift operation and an automatic mode in which the driver does not need to perform the gear shift operation. The vehicle comprises a manual mode shift selector used to select a gear position in the manual mode and an automatic mode shift selector used to select a range in the automatic mode. When a first condition is satisfied, the range is set to a non-travel range at the time when the mode is switched from the manual mode to the automatic mode.

The second aspect of the present disclosure relates to a vehicle capable of switching a mode between a manual mode in which a driver performs gear shift operation and an automatic mode in which the driver does not need to perform the gear shift operation. The vehicle comprises a manual mode shift selector used to select a gear position in the manual mode and an automatic mode shift selector used to select a range in the automatic mode. When a second condition is satisfied, the range is set to a travel range at the time when the mode is switched from the manual mode to the automatic mode.

The third aspect of the present disclosure relates to a vehicle capable of switching a mode between a manual mode in which a driver performs gear shift operation and an automatic mode in which the driver does not need to perform the gear shift operation. The vehicle comprises a manual mode shift selector used to select a gear position in the manual mode and an automatic mode shift selector used to select a range in the automatic mode. The range is set to a non-travel range at the time when the mode is switched from the manual mode to the automatic mode.

According to the vehicle of the first aspect of the present disclosure, the range at the time when the manual mode is switched to the automatic mode is set to the non-travel range when the first condition is satisfied. According to the vehicle of the second aspect of the present disclosure, the range at the time when the manual mode is switched to the automatic mode is set to the travel range when the second condition is satisfied. According to the vehicle of the third aspect of the present disclosure, the range at the time when the manual mode is switched to the automatic mode is set to the non-travel range. Therefore, the range can be set at the time when the manual mode is switched to the automatic mode.

### BRIEF DESCRIPTION OF THE DRAWINGS

FIG. 1 is a diagram showing a configuration of an electric vehicle according to an embodiment of the present disclosure.
FIG. 2 is a diagram showing a configuration of a control device related to driving control of the electric vehicle.
FIG. 3 is a diagram showing an example of a configuration of a shift selector in the first embodiment.
FIG. 4 is a table showing ranges selected in the second embodiment.
FIG. 5 is a table showing ranges selected in the third embodiment.
FIG. 6 is a diagram showing an example of a configuration of the shift selector according to the fourth embodiment.
FIGS. 7A and 7B are diagrams showing examples of the configuration of the shift selector according to the fifth embodiment.

### DETAILED DESCRIPTION

### 1. Configuration of Power System of Electric Vehicle

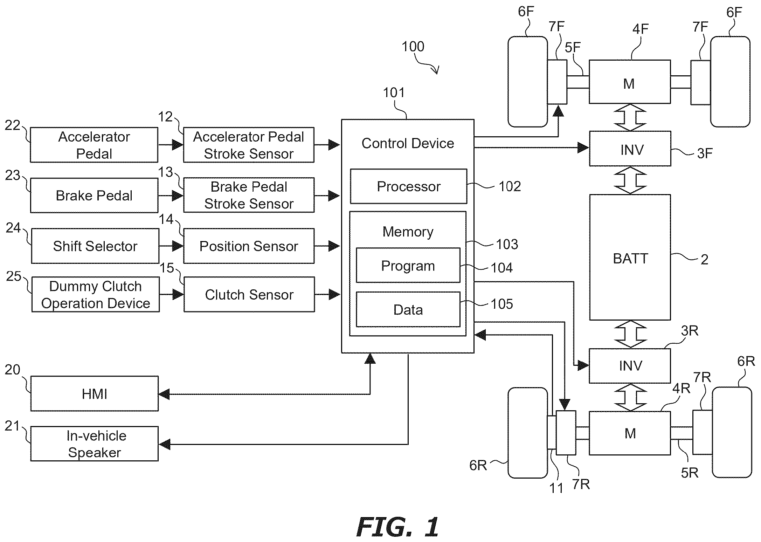

FIG. 1 is a diagram schematically showing a configuration of an electric vehicle 100 according to an embodiment of the present disclosure. First, a configuration of a power system of the electric vehicle 100 is described with reference to FIG. 1.

The electric vehicle 100 is equipped with two electric motors (M) 4F and 4R at the front and the rear as power sources for driving. The electric motors 4F and 4R are, for example, three-phase AC motors. The front electric motor 4F is connected to a front drive shaft 5F, which drives front wheels 6F. The rear electric motor 4R is connected to a rear drive shaft 5R, which drives rear wheels 6R. The front wheels 6F are suspended by front suspension 7F, in which the right and the left can be controlled independently and electronically. The rear wheels 6R are suspended by rear suspension 7R, in which the right and the left can be controlled independently and electronically.

The front electric motor 4F and the rear electric motor 4R are equipped with a front inverter 3F and a rear inverter 3R, respectively. Each of the inverters (INV) 3F and 3R is connected to a battery (BATT) 2. The battery 2 stores electric energy for driving the electric motors 4F and 4R. That is, the electric vehicle 100 is a battery electric vehicle (BEV) which is driven by the electric energy stored in the battery 2. The inverters 3F and 3R are, for example, voltage type inverters and control the torque of the electric motors 4F and 4R by PWM control.

### 2. Control System and Control Mode of Electric Vehicle

Next, a configuration of a control system of the electric vehicle 100 is described with reference to FIG. 1.

The electric vehicle 100 is equipped with a control device 101. The control device 101 is connected to sensors and devices to be controlled that are mounted on the electric vehicle 100 via an in-vehicle network. The control device 101 includes at least a processor (processing circuit) 102 and a memory 103. The memory 103 includes a RAM for temporarily storing data and a ROM for storing a program 104 that can be executed by the processor 102 and various data 105 related to the program. The program 104 is composed of a plurality of instructions. The processor 102 reads the program 104 and the data 105 from the memory 103, executes them, and generates a control signal based on signals acquired from respective sensors. The number of the processors 102 and the memories 103 included in the control device 101 may be one or more.

The control device 101 performs various kinds of control of the electric vehicle 100. One or more programs 104 are read from the memory 103 and executed by the processor 102, thereby realizing control of the electric vehicle 100 by the control device 101.

The control of the electric vehicle 100 performed by the control device 101 includes driving control for controlling driving of the electric vehicle 100. In the driving control, the control device 101 can control the electric vehicle 100 in a plurality of control modes. The control modes of the electric vehicle 100 that can be selected by the control device 101 include an EV mode and an MT mode. The EV mode is a mode in which the electric motors 4F and 4R are controlled with normal torque characteristics to drive the vehicle. The MT mode is a control mode for driving the electric vehicle 100 as if it were a manual transmission (MT) vehicle. In the MT mode, the driver can perform virtual gear shift operation that simulates gear shift operation of the manual transmission vehicle using a shift selector 24 (described below) and select a virtual gear position (gear stage/shift position).

The electric vehicle 100 is equipped with a human-machine interface (HMI) 20 as an interface with the driver. The HMI 20 is equipped with a touch panel display. The HMI 20 displays information on a touch panel display and receives input from the driver through touch operation on the touch panel display. The driver can select the control mode of the electric vehicle 100 through a selection screen displayed on the touch panel display of the HMI 20. Furthermore, the driver may be able to operate the touch panel display of the HMI 20 to select various control modes related to engine characteristics, engine sound, suspension characteristics, or the like that are simulated in the MT mode.

The electric vehicle 100 is equipped with an in-vehicle speaker 21. The in-vehicle speaker 21 provides information to the driver by voice and sound and is also capable of outputting a virtual engine sound, which is described below.

The electric vehicle 100 is equipped with a vehicle speed sensor 11. At least one of wheel speed sensors (not shown in the figures) installed on each of the left and right front wheels 6F and the left and right rear wheels 6R is used as the vehicle speed sensor 11.

The electric vehicle 100 is equipped with an accelerator pedal stroke sensor 12. The accelerator pedal stroke sensor 12 is installed on an accelerator pedal 22 and outputs a signal indicating an amount of depression of the accelerator pedal 22 (accelerator pedal stroke), that is, an accelerator opening degree. Although the accelerator pedal 22 is a pedal-type device operated by the driver's foot, the device for operating the accelerator may be a device operated by the driver's hand. For example, the electric vehicle 100 may be equipped with a lever-type accelerator operation device or a dial-type accelerator operation device that is operated by the driver's hand instead of the accelerator pedal 22. A sensor is also installed on such an accelerator operation device and outputs a signal indicating the operation amount, that is, the accelerator opening degree.

The electric vehicle 100 is equipped with a brake pedal stroke sensor 13. The brake pedal stroke sensor 13 is installed on the brake pedal 23 and outputs a signal indicating an amount of depression of the brake pedal 23, that is, a brake opening degree.

The electric vehicle 100 is also equipped with the shift selector 24. The shift selector 24 is installed on, for example, a console and allows the driver to select a state of the electric vehicle 100 by operating an operation member. While the EV mode is selected, the shift selector 24 operates as a device for selecting a range (shift range). While the MT mode is selected, the shift selector 24 operates as a device for allowing the driver to select a virtual gear position (virtual shift position) by performing virtual gear shift operation. The driver may also be able to switch the mode between the EV mode and the MT mode by using the shift selector 24 instead of or in combination with the HMI 20. The shift selector 24 is described in detail below.

An example of the operation member installed on the shift selector 24 is a shift lever. The driver can select a range (or gear position) by moving the shift lever along a shift path. The shift selector 24 is equipped with a position sensor 14. The position sensor 14 outputs a signal indicating a position of the shift lever operated by the driver, that is, the range (or gear position) selected by the driver. The operation member installed on the shift selector 24 may be a dial, a button, or the like. In this case as well, the shift selector 24 is equipped with the sensor which outputs the signal indicating the range (or gear position) selected by the driver. As mentioned above, the gear position selected by the shift selector 24 in the MT mode is the virtual gear position.

Furthermore, the electric vehicle 100 is equipped with a dummy clutch operation device 25. The dummy clutch operation device 25 is a device for simulating clutch operation of the manual transmission vehicle. Basically, operation of the dummy clutch operation device 25 is enabled in the MT mode and disabled in the EV mode. However, in the MT mode, the driver may be able to select a mode from a clutch operation mode, in which operation of the dummy clutch operation device 25 is required for virtual gear shift operation, and a clutch operation-less mode, in which virtual gear shift operation can be performed without operating the dummy clutch operation device 25. Furthermore, in a case where the shift selector 24 is used to switch the control mode, operation of the dummy clutch operation device 25 may be enabled even in the EV mode.

An example of the dummy clutch operation device 25 is a dummy clutch pedal, which simulates a clutch pedal of the manual transmission vehicle. The dummy clutch pedal is a dummy that is different from the actual clutch pedal. The dummy clutch pedal has a structure similar to that of the clutch pedal installed in the conventional manual transmission vehicle. For example, the dummy clutch pedal is equipped with a reaction force mechanism that generates a reaction force against the depression by the driver. A position where no pedal force is applied is a start position of the dummy clutch pedal, and a position where the pedal is fully depressed is an end position of the dummy clutch pedal. The driver can operate the dummy clutch pedal from the start position to the end position against the reaction force by the reaction mechanism. Alternatively, the dummy clutch operation device 25 may be a lever-type operation device or a dial-type operation device, which is operated by the driver's hand.

The dummy clutch operation device 25 is equipped with a clutch sensor 15. The clutch sensor 15 outputs a signal indicating the amount of operation of the dummy clutch operation device 25. If the dummy clutch operation device 25 is the dummy clutch pedal, an amount of depression of the pedal is acquired as the operation amount of the dummy clutch operation device 25. However, since the electric vehicle 100 does not include an actual clutch, the operation amount of the dummy clutch operation device 25, that is, a clutch opening degree, is a virtual clutch opening degree.

### 3. Driving Control of Electric Vehicle

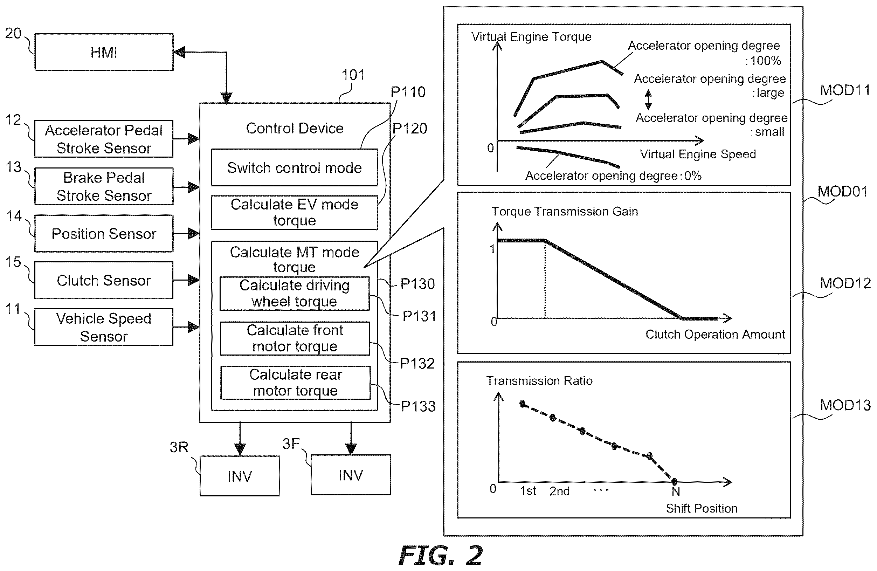

The control mode switched by the driver relates to the driving control of the electric vehicle 100. FIG. 2 is a diagram showing a configuration of the control device 101 related to the driving control of the electric vehicle 100. In detail, FIG. 2 shows a configuration related to motor control, in which the torque of the electric motors 4F and 4R is controlled, among driving control functions. By executing one or more programs 104 for motor control stored in the memory 103, the processor 102 functions as a motor control device.

A control mode signal indicating the control mode is input to the control device 101 as the motor control device. In a case where the driver operates the HMI 20 to select the control mode, the control device 101 acquires the control mode signal from the HMI 20. The control mode signal includes information about the control mode selected by the driver. The control device 101 executes Process P110 based on the control mode signal. In Process P110, the control mode is switched in accordance with the control mode signal. Among switching of the control mode, switching of the EV mode and the MT mode particularly affects the driving control.

When the control mode is switched to the EV mode, the control device 101 executes Process P120 for calculating torque in the EV mode. In Process P120, the control device 101 acquires the vehicle speed from the signal of the vehicle speed sensor 11 and acquires the accelerator opening degree from the signal of the accelerator pedal stroke sensor 12. The control device 101 has a motor torque map with the accelerator opening degree and the vehicle speed as parameters. The control device 101 inputs the vehicle speed and the accelerator opening degree into the motor torque map and controls the inverters 3F and 3R such that the electric motors 4F and 4R generate the torque obtained from the motor torque map.

When the control mode is switched to the MT mode, the control device 101 executes Process P130 for calculating torque in the MT mode. Process P130 includes Process P131 for calculating torque to be generated at the driving wheels. Furthermore, Process P130 includes Process P132 and Process P133. Process P132 is a process for calculating torque to be generated by the front electric motor 4F, and Process P133 is a process for calculating torque to be generated by the rear electric motor 4R. Processes P132 and P133 are executed in accordance with the driving wheel torque calculated in Process P130 and the torque distribution between the front wheels 6F and the rear wheels 6R.

A vehicle model MOD01 is used for calculating the driving wheel torque in Process P131. The vehicle model MOD01 includes an engine model MOD11, a clutch model MOD12, and a transmission model MOD13. An engine, a clutch, and a transmission virtually realized by the vehicle model MOD01 are referred to as a virtual engine, a virtual clutch, and a virtual transmission, respectively. In the engine model MOD11, the virtual engine is modeled. In the clutch model MOD12, the virtual clutch is modeled. In the transmission model MOD13, the virtual transmission is modeled.

The engine model MOD11 calculates a virtual engine speed and virtual engine torque. The virtual engine speed is calculated from the vehicle speed, an overall reduction ratio, and a slip ratio of the virtual clutch. The virtual engine torque is calculated from the virtual engine speed and the accelerator opening degree. The vehicle speed is acquired from the signal of the vehicle speed sensor 11. The accelerator opening degree is acquired from the signal of the accelerator pedal stroke sensor 12. The overall reduction ratio is a value obtained by multiplying a transmission ratio of the virtual transmission by a reduction ratio determined by a mechanical structure from the virtual transmission to the driving wheels. In the engine model MOD11, a relationship between the virtual engine speed and the virtual engine torque is defined for each accelerator opening degree. Engine characteristics of the engine model MOD11 may be selectable by the driver by operating the HMI 20.

The clutch model MOD12 calculates a torque transmission gain. The torque transmission gain is a gain for calculating a degree of torque transmission of the virtual clutch in accordance with the clutch opening degree. When the clutch operation mode is selected, the clutch opening degree is acquired from the signal of the clutch sensor 15. The clutch opening degree is 0% at the start position of the dummy clutch operation device 25 and is 100% at the end position of the dummy clutch operation device 25. In the clutch model MOD12, the torque transmission gain is given in accordance with the clutch opening degree. The torque transmission gain is converted into a clutch torque capacity of the virtual clutch, that is, a virtual clutch torque capacity. Then, based on a comparison between the virtual clutch torque capacity and the virtual engine torque calculated by the engine model MOD11, virtual clutch torque input from the virtual clutch to the virtual transmission is calculated. In addition, in the clutch model MOD12, a value obtained by subtracting the torque transmission gain from 1 is calculated as the slip ratio. The slip ratio is used to calculate the virtual engine speed in the engine model MOD11.

When the clutch operation-less mode is selected, the clutch opening degree input to the clutch model MOD12 is calculated using a clutch operation model. The clutch operation model is a model that simulates clutch operation of a model driver. The vehicle speed, the virtual engine speed, and the signal from the position sensor 14 are input to the clutch operation model.

The signal from the position sensor 14 is used to calculate the timing of the clutch operation. When the gear shift operation by the driver is detected from the signal of the position sensor 14, the clutch operation model maximizes the clutch opening degree so as to disengage the virtual clutch. The vehicle speed and the virtual engine speed are used to calculate the clutch opening degree. In order to smoothly match a rotating speed of an input shaft of the virtual transmission calculated from the vehicle speed with the virtual engine speed, the clutch operation model calculates the clutch opening degree based on the rotating speed difference between the rotating speed of the input shaft of the virtual transmission and the virtual engine speed.

The transmission model MOD13 calculates a virtual transmission ratio. The virtual transmission ratio is a transmission ratio of the virtual transmission determined by the virtual gear position. The virtual transmission ratio is set for each gear position. A maximum virtual transmission ratio is set for the first speed, and the virtual transmission ratio decreases in the order of the second, third, fourth speed, and so on. The gear position is associated one-to-one with the signal of the position sensor 14.

The transmission model MOD13 calculates virtual transmission torque using the virtual transmission ratio and the virtual clutch torque. The virtual transmission torque is virtual torque output from the virtual transmission. The control device 101 controls the inverters 3F and 3R so as to change the output torque of the electric motors 4F and 4R in accordance with the virtual transmission torque. The virtual transmission torque changes discontinuously in response to the change in the virtual transmission ratio. This discontinuous change in virtual transmission torque generates a torque shock in electric vehicle 100, creating the impression that the vehicle is equipped with a stepped transmission.

The vehicle model MOD01 calculates the driving wheel torque from the virtual transmission torque and the reduction ratio. The driving wheel torque is a total amount of the torque given to the left and right front wheels 6F and the left and right rear wheels 6R. Torque distribution to the front wheels 6F and the rear wheels 6R may be fixed or may be actively or passively varied. For example, the driver may be able to select a four-wheel drive mode, in which all of the four wheels are driven, or a rear-wheel drive mode, in which only the rear wheels are driven.

The vehicle model MOD01 is set in advance. A relationship between the driving wheel torque calculated based on the vehicle model MOD01 and the accelerator opening degree changes when the virtual gear position is switched. In other words, in the EV mode, the torque changes continuously with respect to the accelerator opening degree, whereas in the MT mode, the relationship between the accelerator opening degree and the torque output from the electric motors 4F and 4R is switched to a relationship corresponding to a selected gear position from among a plurality of relationships predetermined by the vehicle model MOD01 in accordance with switching of the virtual gear position.

In Process P132, the torque of the front electric motor 4F in the MT mode (front motor torque) is calculated by multiplying the driving wheel torque calculated in Process P131 by the torque distribution rate to the front wheels 6F and the reduction ratio from the output shaft of the front electric motor 4F to the front wheels 6F. The control device 101 controls the front inverter 3F so as to cause the front electric motor 4F to generate the front motor torque calculated in Process P132.

In Process P133, the torque of the rear electric motor 4R in the MT mode (rear motor torque) is calculated by multiplying the driving wheel torque calculated in Process P131 by the torque distribution rate to the rear wheels 6R and the reduction ratio from the output shaft of the rear electric motor 4R to the rear wheels 6R. The control device 101 controls the rear inverter 3R so as to cause the rear electric motor 4R to generate the rear motor torque calculated in Process P133.

### 4. Sound Control of Electric Vehicle

The control device 101 may also perform sound control to control the sound emitted by the in-vehicle speaker 21. By executing one or more programs 104 for the sound control stored in the memory 103, the processor 102 functions as a sound control device. The processor 102 which functions as the driving control device and the processor 102 which functions as the sound control device may be different processors or may be the same processor.

The control device 101 as the sound control device can cause the in-vehicle speaker 21 to emit sound that is artificially generated. One kind of the artificial sound is virtual engine sound that simulates the engine sound of the conventional transmission vehicle. When the control mode signal indicating that the MT mode is selected is input, the control device 101 as the sound control device generates the virtual engine sound based on the virtual engine torque and the virtual engine speed calculated in Process P131.

If the control mode related to the engine sound is selectable by the driver, the engine sound selected through the HMI 20 is used as a sound source of the virtual engine sound to be emitted from the in-vehicle speaker 21. However, the sound source is not used as it is. A sound pressure of the engine sound is calculated such that the sound pressure becomes higher as the virtual engine torque becomes larger, and a frequency of the engine sound is calculated such that the frequency becomes higher as the virtual engine speed becomes higher. Then, for example, the sound pressure of the sound source is changed by an amplifier, and the frequency of the sound source is changed by a frequency modulator, and the virtual engine sound is reproduced by the in-vehicle speaker 21. The virtual engine torque and the virtual engine speed change depending on the driver's accelerator operation, gear shift operation, and clutch operation. In this way, by changing the sound pressure and the frequency of the virtual engine sound in accordance with the virtual engine torque and the virtual engine speed, which change depending on the driver's operation, it is possible to give the driver a sense of reality as if they were driving a vehicle with an actual transmission.

### 5. Configuration of Shift Selector

### 5-1. First Embodiment

The shift selector 24 includes a manual mode shift selector, which is used to select the gear position in the MT mode, and an automatic mode shift selector, which is used to select the range in the EV mode. A configuration and behavior of the shift selector 24 is described below with reference to several embodiments.

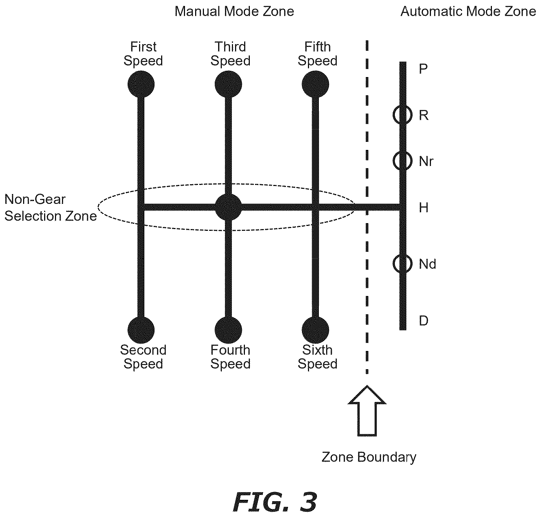

FIG. 3 shows an example of the configuration of the shift selector 24 in the first embodiment. The shift selector 24 is a device in which the ranges and the virtual gear positions are associated with predetermined physical positions respectively, and the physical position is selected by the operation member. The shift lever is used as the operation member, and the driver can move the lever along the shift path between each range (or each gear position).

The manual mode shift selector and the automatic mode shift selector are integrated, and the shift paths which constitute the respective shift selectors are connected to each other at a zone boundary. In FIG. 3, the zone boundary is shown by a broken line. The left zone of the zone boundary is a manual mode zone, and the shift path on the left side of the zone boundary constitutes the manual mode shift selector. The right zone of the zone boundary is an automatic mode zone, and the shift path on the right side of the zone boundary constitutes the automatic mode shift selector.

Furthermore, the shift lever is common to both the manual mode shift selector and the automatic mode shift selector. The operation member that is used in common in the manual mode shift selector and the automatic mode shift selector may be called a common operation member. The shift lever used as the common operation member can be operated by the driver to come and go between two zones, the manual mode zone and the automatic mode zone.

The behavior of the shift lever differs between the two zones. In the manual mode zone, when the driver moves the shift lever to select the gear position, the shift lever stays in the position of the gear position selected by the driver. For example, when the driver moves the shift lever to the position corresponding to the first speed, the signal indicating that the first speed is selected as the gear position is output, and the shift lever stays at the position until another operation is input thereafter. That is, the manual mode shift selector accepts input relating to the gear position and also indicates the current gear position by the physical position of the shift lever. The shift selector of this type of behavior is sometimes called the alternate type shift selector. The alternate type shift selector has the advantage that the driver can confirm the currently selected gear position visually or by touch. As mentioned above, the gear position selected in the manual mode zone is the virtual gear position.

On the other hand, in the automatic mode zone, the shift lever is at a home position (position H in FIG. 3) when no external force is applied. When the driver moves the shift lever to the position P, R, Nr or Nd, or D, the operation is input and the parking range, reverse range, neutral range, or forward range (drive range) is selected respectively, but when the driver finishes the operation and releases his/her hold, the shift lever automatically returns to the home position. That is, in the EV mode, the shift lever is at the home position when not being operated by the driver, and the physical position of the lever does not indicate the currently selected range. The shift selector of this type of behavior is sometimes called a momentary type shift selector. In the EV mode, the current range is displayed on the meter panel, the HMI 20, the instrument panel, or the like.

The shift selector 24 is also used as a switching device that switches the control mode between the EV mode and the MT mode. The shift lever is in the shift path of the manual mode zone, which is integrated with the shift path of the automatic mode zone, while the MT mode is selected. From this state, when the driver moves the shift lever to the automatic mode zone while satisfying a switching condition for switching the control mode, the control mode is switched to the EV mode. When the mode is switched from the EV mode to the MT mode, the reverse operation is performed.

The switching condition for switching the control mode may be an arbitrary condition. For example, the switching condition may be that the operation of moving the shift lever is performed within a predetermined time after the driver operates the HMI 20 to switch the control mode. Alternatively, the switching condition may be that the operation of moving the shift lever is performed while the driver is operating the dummy clutch operation device 25.

The integrated shift path of the shift selector 24 connects a non-gear selection zone of the manual mode shift selector and the home position of the automatic mode shift selector via the zone boundary. The non-gear selection zone of the manual mode shift selector is a zone which indicates a state in which no gear position is selected. When the driver switches the control mode from the MT mode to the EV mode, he/she moves the shift lever from the manual mode zone to the automatic mode zone so as to cross the zone boundary. Immediately after moving to the automatic mode zone, the shift lever is at the home position and does not physically indicate any range. However, the vehicle state requires that one of the ranges be selected. Therefore, when the control mode is switched from the MT mode to the EV mode, the control device 101 sets the range to the neutral range immediately after the control mode is switched. By setting the range to the neutral range at the time when the control mode is switched, it is possible to prevent the driver from feeling uncomfortable due to the fact that the driving wheel torque for driving the electric vehicle 100 suddenly starts to be output at the same time as the control mode is switched.

In particular, when the shift selector 24 is configured as shown in FIG. 3, when the shift lever is moved from the manual mode zone to the automatic mode zone, it passes through the non-gear selection zone of the manual mode zone. The non-gear selection zone is a zone in which no virtual gear position is selected. When the shift lever is in the non-gear selection zone, the neutral position of the manual transmission vehicle is simulated. In other words, the non-gear selection zone can be referred to as a virtual neutral position. In the virtual neutral position, no driving wheel torque is output to drive the electric vehicle 100. In the embodiment when the shift lever is moved to the automatic mode zone and the control mode is switched, the range is first set to the neutral range, which is particularly effective in preventing the driver from feeling uncomfortable.

In order to simulate the neutral position, in the non-gear selection zone, the driving force transmitted from the electric motors 4F and 4R to the driving wheels may be physically cut off, or the torque output from the electric motors 4F and 4R may be set to zero. However, a travel resistance may differ between the electric vehicle 100 and the manual transmission vehicle to be simulated, and simply cutting off the driving force may not be enough to reproduce the driving feel of the neutral position of the actual manual transmission vehicle. Therefore, in the non-gear selection zone, a small driving force may be output from the electric motor 4F or 4R to the driving wheels to simulate the neutral position of the manual transmission vehicle that is to be simulated.

In addition, in the configuration of the shift selector 24 shown in FIG. 3, a reverse position is not provided in the manual mode zone. Therefore, when the driver wants to reverse the electric vehicle 100, the driver has to move the shift lever to the automatic mode zone and then select the reverse range. However, the shift selector 24 is not limited to such a configuration. The reverse position may be provided in the manual mode zone, and the driver may be able to select the reverse position by moving the shift lever along the shift path in the manual mode zone. Furthermore, although the manual mode shift selector has gear positions of the first to sixth speed in the example of FIG. 3, this is also an example, and the number of the gear positions may be more or less than this.

### 5-2. Modification of First Embodiment

At the time when the control mode is switched from the MT mode to the EV mode, the control device 101 may set the range to the parking range. Similarly in this case, when the shift lever is moved to the automatic mode zone and the control mode is switched, it is possible to prevent the driver from feeling uncomfortable due to the sudden start of output of the driving wheel torque to drive the electric vehicle 100.

The forward range and the reverse range are ranges for driving the electric vehicle 100 forward or backward, whereas the neutral range and the parking range are not ranges for driving the electric vehicle 100. Therefore, the forward range and the reverse range may be generically referred to as a travel range, and the neutral range and the parking range may be generically referred to as a non-travel range. In other words, in the first embodiment, at the time when the control mode is switched from the MT mode to the EV mode, the range is automatically set to the non-travel range.

### 5-2. Second Embodiment

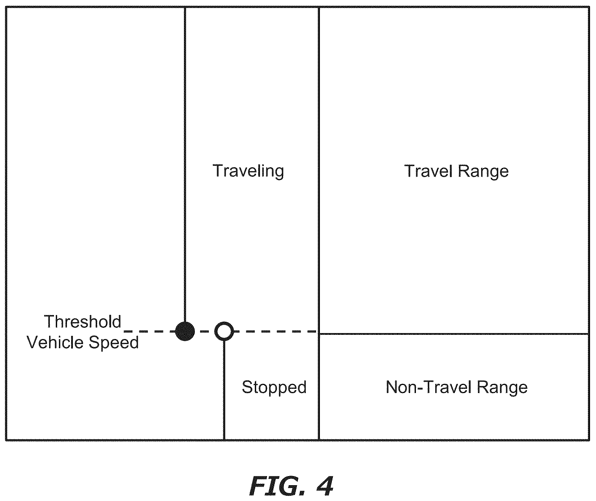

In the second embodiment, the configuration of the shift selector 24 is the same as that shown in FIG. 3. However, the range after switching from the MT mode to the EV mode is set variably depending on the situation. FIG. 4 is a table showing the ranges that are set at the time of switching. As shown in the table, at the time when the MT mode is switched to the EV mode, the control device 101 sets the range to the non-travel range when the electric vehicle 100 is stopped and to the travel range when the electric vehicle 100 is traveling.

Whether the vehicle is traveling or stopped can be determined based on the vehicle speed, for example. In other words, a threshold vehicle speed is set, and if the vehicle speed is equal to or higher than the threshold vehicle speed, it is determined that the vehicle is traveling, and if the vehicle speed is lower than the threshold vehicle speed, it is determined that the vehicle is stopped.

If the control mode is switched while the electric vehicle 100 is traveling, there is a high possibility that the driver intends to continue traveling the electric vehicle 100 even after the control mode is switched. In such a scene, the range at the time of switching is set to the travel range, thereby reducing the driver's effort in switching the range to the travel range. Furthermore, at the time of switching, the travel range is automatically set only when the electric vehicle 100 is traveling, and the non-travel range is automatically set when the electric vehicle 100 is stopped, which prevents the driver from feeling uncomfortable due to the sudden start of outputting the driving wheel torque for driving the electric vehicle 100.

The travel range includes the forward range and the reverse range. If the manual mode shift selector does not include the reverse position as in the configuration example of FIG. 3, the travel range selected at the time of mode switching in accordance with the table may be fixed to the forward range. Alternatively, which of the travel range, the forward range or the reverse range, is selected may be variable depending on the situation. That is, if the position selected before the shift lever passes through the non-gear selection zone and enters the automatic mode zone is the gear position for traveling forward, the forward range may be selected, and if the position selected before the shift lever passes through the non-gear selection zone and enters the automatic mode zone is the gear position for traveling backward, the reverse range may be selected. Alternatively, the forward range may be selected when the control mode is switched while the electric vehicle 100 is traveling forward, and the reverse range may be selected when the control mode is switched while the electric vehicle 100 is traveling backward. In addition, the non-travel range includes the neutral range and the parking range. The non-travel range selected in accordance with the table at the time when the mode is switched may be fixed to either the neutral range or the parking range.

### 5-3. Third Embodiment

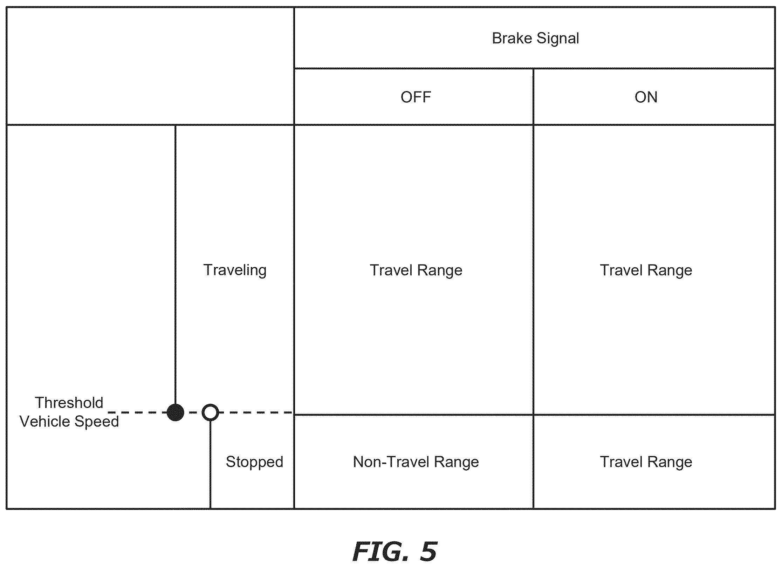

In the third embodiment, the configuration of the shift selector 24 is the same as that shown in FIG. 3. However, the range which is set is different. FIG. 5 is a table showing the ranges selected at the time when the MT mode is switched to the EV mode.

As shown in the table, in the third embodiment, if the control mode is switched from the MT mode to the EV mode while the electric vehicle 100 is traveling or while the brake signal in accordance with the operation by the driver is ON, the range at the time of switching is set to the travel range, and if the control mode is switched while the vehicle is stopped and the brake signal is OFF, the range at the time of switching is set to the non-travel range.

The brake signal is determined to be ON, for example, when an operation amount larger than or equal to a threshold is input to the brake pedal 23, and is determined to be OFF when no operation amount is input or the operation amount is less than or equal to the threshold.

The travel range includes the forward range and the reverse range. When the travel range is selected as the range at the time of switching, the forward range may be selected unconditionally, or whether the forward range or the reverse range is selected may be variable depending on the situation. The non-travel range includes the neutral range and the parking range. When the non-travel range is selected as the range at the time of switching, the neutral range may be selected unconditionally, or the parking range may be selected unconditionally.

### 5-4. Fourth Embodiment

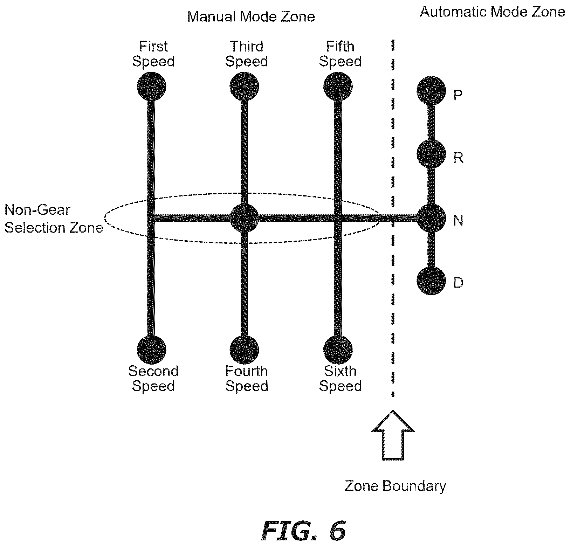

FIG. 6 is a diagram showing an example of a configuration of the shift selector 24 in the fourth embodiment.

In the shift selector 24 of FIG. 6, similarly to the first embodiment, the driver can select each range (or each gear position) by moving the shift lever along the shift path. However, the automatic mode shift selector is the alternate type shift selector, and the shift lever stays at the position of the selected range even after the driver releases his/her hold. Similarly to the first embodiment, the manual mode shift selector and the automatic mode shift selector are configured as an integrated unit, and a common shift lever is used. The shift selector 24 is also used as the mode switching device.

In this example, the non-gear selection zone of the manual mode zone and the neutral range of the automatic mode zone are connected to each other via the zone boundary. When switching the control mode from the MT mode to the EV mode, the driver moves the shift lever toward the automatic mode zone via the non-gear selection zone of the manual mode zone, and the shift lever moved to the automatic mode zone first enters the neutral range. That is, like the first embodiment, at the time when the control mode is switched from the MT mode to the EV mode, the neutral range is selected.

In this way, the range at the time when switching from the MT mode to the EV mode may be determined by the physical configuration. In this case as well, it is possible to prevent the driver from feeling uncomfortable due to the fact that the driving wheel torque for driving the electric vehicle 100 suddenly starts to be output when the control mode is switched.

However, the range that is initially selected at the time when the MT mode is switched to the EV mode is determined to be one range by the physical configuration in the alternate type shift selector, whereas it can be set flexibly depending on the situation in the momentary type shift selector. Therefore, when the range at the time of mode switching is set variably depending on the condition as in the second and third embodiments, it is effective to use the momentary type shift selector as the automatic mode shift selector.

### 5-5. Fifth Embodiment

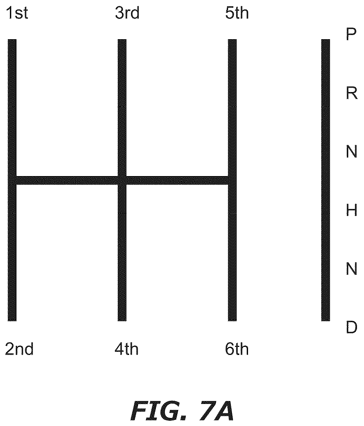

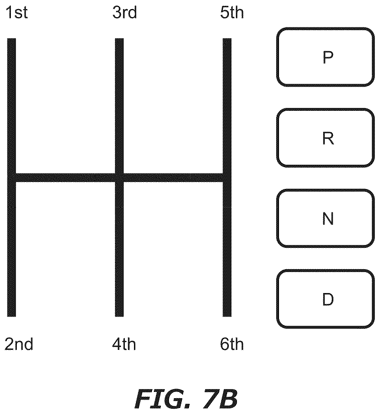

FIGS. 7A and 7B show examples of the configuration of the shift selector 24 in the fifth embodiment. FIGS. 7A and 7B show examples in a case where the manual mode shift selector is the alternate type shift selector and the automatic mode shift selector is the momentary type shift selector.

In the example of FIG. 7A, both the manual mode shift selector and the automatic mode shift selector include shift levers as the operation members, and the driver can select the range (or gear position) by moving the shift lever along the shift path. However, the manual mode shift selector and the automatic mode shift selector are configured as separate units, and they are equipped with respective shift levers. In this case, for example, the driver selects the control mode by the HMI 20. When the MT mode is selected by the HMI 20, operation of the shift lever of the manual mode shift selector is enabled, and when the EV mode is selected, operation of the shift lever of the automatic mode shift selector is enabled. When not operated by the driver, the shift lever of the automatic mode shift selector is at the home position.

In the example of FIG. 7B, the manual mode shift selector includes a shift lever as the operation member, and the driver can select the gear position by moving the shift lever along the shift path. The automatic mode shift selector includes buttons as the operation member, and the driver can select each range by pressing the button. In this way, the operation member of the manual mode shift selector and the operation member of the automatic mode shift selector may be different. The control mode can be selected, for example, by the HMI 20, as in FIG. 7A. As another example, although not shown in the figure, the automatic mode shift selector may be configured such that a part of the ranges is selectable by the shift lever, and another part is selectable by the button. For example, only the parking range may be selectable by pressing the button, and the other ranges may be selectable by operating the shift lever.

The fifth embodiment can be combined with any one or more of the first to third embodiments. That is, at the time when the MT mode is switched to the EV mode, the non-travel range may be automatically selected regardless of the driving state of the vehicle. Alternatively, the shift range which varies depending on the condition may be automatically selected in accordance with the table of FIG. 4 or FIG.5.

### 5-6. Other Embodiment

When the control mode is switched from the MT mode to the EV mode, the control device 101 may notify the driver of the selected range by voice and sound from the in-vehicle speaker 21. By providing voice or sound guidance, the driver can more easily understand the selected range. In particular, in a case where the selected range varies depending on the condition, as in the second and third embodiments, it may take some time for the driver to understand the selected range, and it is effective to provide voice and sound notification.

### 6. Modification

The configuration of the shift selector 24 is described above. In any of the first to fifth embodiments, the following modification is possible. That is, although the shift selector 24 is described above as a device mounted on the electric vehicle, the shift selector 24 can be applied to a vehicle other than the electric vehicle as long as the vehicle is capable of switching the gear shift mode between the automatic mode, in which the gear shift operation is performed automatically, and the manual mode, in which the driver performs the gear shift operation by himself/herself. For example, the shift selector 24 may be applied to a semiautomatic transmission vehicle, and may be configured such that the range at the time when the manual mode is switched to the automatic mode is set to the neutral range, or such that the range at the time of switching is determined in accordance with the table of FIG. 4 or 5. The EV mode of the electric vehicle 100 corresponds to the automatic mode, and the MT mode corresponds to the manual mode.

## Claims

1. A vehicle (100) capable of switching a mode between a manual mode in which a driver performs gear shift operation and an automatic mode in which the driver does not need to perform the gear shift operation,
the vehicle (100) comprising:
a manual mode shift selector for selecting a gear position in the manual mode; and
an automatic mode shift selector for selecting a range in the automatic mode, wherein the vehicle (100) is configured so that:
when a first condition is satisfied, the range is set to a non-travel range at the time when the mode is switched from the manual mode to the automatic mode.

2. The vehicle (100) according to claim 1, wherein
the manual mode shift selector and the automatic mode shift selector are connected to each other,
the manual mode shift selector is configured such that the gear position is selected by moving a common operation member, and
the automatic mode shift selector is configured such that the range is selected by moving the common operation member.

3. The vehicle (100) according to claim 2, wherein the manual mode shift selector and the automatic mode shift selector are connected such that the common operation member moves to the automatic mode shift selector via a non-gear selection zone of the manual mode shift selector.

4. The vehicle (100) according to claim 3, wherein the manual mode shift selector is an alternate type shift selector, and the automatic mode shift selector is a momentary type shift selector.

5. The vehicle (100) according to claim 4,
the non-gear selection zone of the manual mode shift selector is connected to a home position of the automatic mode shift selector.

6. The vehicle (100) according to any one of claims 1 to 5, wherein
the non-travel range includes a neutral range, and the vehicle (100) is configured so that:
when the first condition is satisfied, the range is set to the neutral range at the time when the mode is switched from the manual mode to the automatic mode.

7. The vehicle (100) according to any one of claims 1 to 5, further comprising:
an electric motor (4F, 4R) as a drive source;
an accelerator pedal (22); and
a control device (101) for controlling the electric motor (4F, 4R), wherein
the gear shift operation is virtual gear shift operation, and
the control device (101) is configured to:
in the automatic mode, change output torque of the electric motor (4F, 4R) continuously depending on operation of the accelerator pedal (22) by the driver, and
in the manual mode, switch a relationship between an operation amount of the accelerator pedal (22) and the output torque of the electric motor (4F, 4R) from among a plurality of predetermined relationships in response to operation of the manual mode shift selector by the driver.

8. The vehicle (100) according to claim 7, wherein the first condition is that the mode is switched from the manual mode to the automatic mode while the vehicle (100) is stopped.

9. The vehicle (100) according to claim 7, wherein the first condition is that the mode is switched from the manual mode to the automatic mode when the vehicle (100) is stopped and the driver is not inputting an operation amount to a brake pedal (23) of the vehicle (100).

10. The vehicle (100) according to claim 7, wherein when a second condition is satisfied, the range is set to a travel range at the time when the mode is switched from the manual mode to the automatic mode.

11. The vehicle (100) according to claim 10, wherein
the travel range includes a forward range, and the vehicle (100) is configured so that:
when the second condition is satisfied, the range is set to the forward range at the time when the mode is switched from the manual mode to the automatic mode.

12. The vehicle (100) according to claim 10, wherein the second condition is that the mode is switched from the manual mode to the automatic mode while the vehicle (100) is traveling.

13. The vehicle (100) according to claim 10, wherein the second condition is that the mode is switched from the manual mode to the automatic mode while the vehicle (100) is stopped and the driver is inputting an operation amount to a brake pedal (23) of the vehicle (100).
